Europäisches Patentamt

European Patent Office

Office européen des brevets

(11) Publication number : **0 496 513 A2**

## EUROPEAN PATENT APPLICATION

(21) Application number : 92300266.1

(22) Date of filing : 13.01.92

(51) Int. CI.[5] : **C08F 8/00,** B01J 39/00,
B01J 41/00, G01N 30/00,
C07K 3/22

(30) Priority : 14.01.91 JP 2753/91
15.11.91 JP 300799/91

(43) Date of publication of application :
29.07.92 Bulletin 92/31

(84) Designated Contracting States :
DE FR GB SE

(71) Applicant : BABCOCK-HITACHI KABUSHIKI
KAISHA
6-2, 2-chome, Ohtemachi Chiyoda-ku
Tokyo 100 (JP)

(72) Inventor : Yonezawa, Manami, Yokohama
Research Laboratory
Babcock-Hitachi K. K., 2-10, Isogo 1-chome
Isogo-ku, Yokohama-shi, Kanagawa-ken (JP)
Inventor : Kamiguchi, Taiji, Yokohama
Research Laboratory
Babcock-Hitachi K. K., 2-10, Isogo 1-chome
Isogo-ku, Yokohama-shi, Kanagawa-ken (JP)
Inventor : Fujita, Kazunori, Yokohama
Research Laboratory
Babcock-Hitachi K. K., 2-10, Isogo 1-chome
Isogo-ku, Yokohama-shi, Kanagawa-ken (JP)

(74) Representative : Pendlebury, Anthony et al
PAGE, WHITE & FARRER 54 Doughty Street
London WC1N 2LS (GB)

(54) Process for producing ion-exchange resins and use of the resins for separating amino acids.

(57) A process for producing an ion-exchange resin using a styrene-divinylbenzene copolymer is provided, which process comprises reacting styrene with m-divinylbenzene of p-divinylbenzene with which 0 to 20% by volume of another isomer is admixed to obtain a styrene-divinylbenzene copolymer, followed by crosslinking and imparting an active group to the copolymer, such as by sulfonating the copolymer with chlorosulfuric acid. When an eluent is passed through a column filled with the ion-exchange resin, it is possible to separate multicomponent compounds with a reduced pressure and a high efficiency. A process for separating amino acids using the above ion-exchange resin is also provided.

This invention relates to a process for producing an ion-exchange resin using a styrene-divinylbenzene copolymer for liquid chromatography and a process for separating amino acids using the ion-exchange resin.

Heretofore, as a resin used for liquid chromatography, an ion-exchange resin obtained by imparting an ion-exchange group to a crosslinked polymer such as styrenedivinylbenzene copolymer, acrylic resin, polyvinyl acetate, polyacrylates, etc. has been used, and this ion-exchange resin has been utilized for separating ionic compounds.

In order to shorten the time required for liquid chromatography, a pressure-resistant device and an ion-exchange resin capable of passing an eluent at a high rate are necessary. For example, if an eluent is passed through a column at a high rate, the pores in the ion-exchange resin is compressed so that the column pressure increases, thereby increasing a load applied to a device, particularly a liquid-feeding pump. While the mechanical strength of the ion-exchange resin can be increased by increasing the degree of crosslinking of the resin, change in the degree of crosslinking has a large influence upon the separation performance, upon the separation efficiency of multicomponent amino acids, for example. Styrene-divinylbenzene copolymers are obtained by suspension-polymerizing styrene and divinylbenzenes in an aqueous solution, and as divinylbenzenes which are crosslinking monomers, mixtures of m-divinylbenzene, p-divinylbenzene, m-ethylvinylbenzene, p-ethylvinylbenzene, etc. have been used. For example, in Japanese patent publication No. Sho 54-26396, a mixture of 55% by weight of divinylbenzene, 40% by weight of ethylvinylbenzene and 50% by weight of other saturated compound has been used as crosslinking monomers. In recent years, however, a styrene-divinylbenzene copolymer having no load on the device and having a low column pressure has been desired particularly as a resin for a high rate analyzer for amino acids.

According to one aspect of the present invention, there is provided a process for producing an ion-exchange resin, which process comprises copolymerising a styrene and a divinylbenzene with which 0 to 20% by volume of another isomer thereof is affixed thereby to obtain a styrene-divinylbenzene copolymer, crosslinking the resultant copolymer and introducing an active group into the crosslinked copolymer so as to form an ion-exchange resin, the said active group imparting to the resin the ability to combine with or exchange ions in a solution.

According to a further aspect of the present invention, there is provided a process for separating amino acids which comprises preparing a separation column filled with an ion-exchange resin obtained by a process as defined above, preferably by sulfonating a copolymer of styrene with a divinylbenzene with which 0 to 20% by volume of another isomer is admixed, adsorbing amino acids to be separated on the ion-exchange resin in the column, passing an eluent for the amino acids through the separation column at a linear velocity of 0.1 to 0.2 cm/sec, to obtain successively solutions containing the separated amino acids.

The ion-exchange resins produced by the process of the present invention exhibit a high separation performance, and enable amino acids to be separated at a high rate and with a high efficiency.

BRIEF DESCRIPTION OF THE DRAWINGS

Fig. 1 shows a chart illustrating the relationship between the proportion of m-divinylbenzene in divinylbenzene used and the column pressure.

Fig. 2 shows a chart illustrating the infrared absorption spectra of styrene-p-divinylbenzene copolymer (a) obtained in Example 1.

Fig. 3 shows a chart illustrating the infrared absorption spectra of styrene-m-divinylbenzene copolymer (b) obtained in Example 2.

Fig. 4 shows a flow chart illustrating an apparatus for analyzing amino acids utilizing liquid chromatography.

Fig. 5 shows a chart illustrating a chromatography of four nucleic acid bases in Example 14.

Fig. 6 shows a chart illustrating the relationship between the linear velocity of the eluent and the column pressure.

Fig. 7 shows a chart illustrating the relationship between the linear velocity of the eluent and the column efficiency.

Fig. 8 shows a chart illustrating a chromatography of 39 amino acids by way of a high rate separation, according to the process of the present invention.

In the copolymerization of styrene with divinylbenzenes, if divinylbenzenes which have isomers in a considerable amount are used, monomers having different structures are crosslinked in the resulting copolymer so that the structure of the the resin having an influence upon the column pressure and the separation performance in liquid column chromatography varies, thereby making the degree of swelling, the degree of shrinkage, etc. of the resin uneven, thus when an eluent is passed through the column at a high rate, the column pressure is going to rise. Whereas, in the present invention, since divinylbenzenes with which isomers are substantially not present or admixted in a proportion of 20% by volume or less, are used, it is possible to crosslink

2

monomers having almost the same structure; hence the structure of the pores in the resin becomes almost uniform to make it possible to reduce the column pressure.

The styrene-divinylbenzene copolymer used in the present invention can be obtained by copolymerizing styrene with divinylbenzenes with which another isomer (m-divinylbenzene or p-divinylbenzene) is substantially not present in admixture. The range in which another isomer is substantially not present in admixture, referred to in the present invention, means that the proportion of the isomer is 0 to 20% by volume, preferably 0 to 10% by volume.

The copolymerization is carried out, for example, by feeding styrene, divinylbenzene and a polymerization inhibitor into an aqueous solution having dissolved therein a water-soluble polymer compound such as polyvinyl alcohol, etc. as a particle size-adjusting agent and a surfactant such as sodium dodecylsulfate, etc. as a particle adhesion-preventing agent, followed by suspension polymerization. In order to obtain a finely divided particle-form copolymer having a superior separation performance, it is preferred to employ conditions of a monomer concentration of 100 g or less per $1\ell$ of water, a concentration of the water-soluble polymer compound of 5.0 $\times$ 10$^{-2}$ h/m$\ell$ or more, an agitation rate of 1,500 rpm or more, and a polymerization temperature of 50° to 100°C.

As the polymerization initiator, peroxides such as benzoyl peroxide, t-butyl peroxide, etc. or azocompounds such as azobisisobutyronitrile, azobiscyclohexanenitrile, etc. are used. The polymerization initiator is added preferable in an amount of 1% by weight or more based upon the weight of the monomers.

The resin for liquid column chromatography of the present invention is obtained usually by swelling the finely divided particle-form styrene-divinylbenzene copolymer obtained above, with tetrachloroethane, for example, followed by reacting the resulting material with a compound that gives an active group to the resin, that is chlorosulfuric acid, for example. The resulting resin usually has an ion exchange capacity of 3 meq/g or more.

As to the particle size of the ion-exchange resin, the column efficiency (HETP: height equivalent to a theoretical plate), but the particle size is preferably 1 to 10 μm, more preferably 2 to 6 μm in the aspect of the uniformity of filling, the column pressure, etc.

The inner diameter and length of the column suitable for separation of amino acids have no particular limitation, but the inner diameter is preferably in the range of 2 to 7 mm and the length is usually 60 mm or longer. The conditions of filling the ion-exchange resin in the column vary depending upon the resin to be filled, but it is preferred to fill the resin under a column pressure of 100 to 200 kg/cm$^2$ with an eluent to be used for separation and for about one hour. When amino acids are separated at a high rate using the above separation column, it is preferred to pass an eluent through the column at a linear velocity of 0.1 to 0.2 cm/sec.

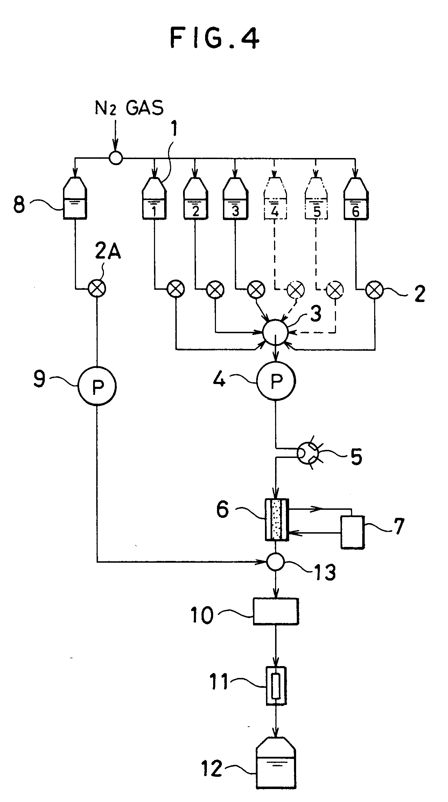

Fig. 4 shows a flow chart of an apparatus for analyzing amino acids utilizing liquid chromatography according to the present invention. This apparatus is composed of eluent storage bottles 1 containing buffer solutions of various compositions; an eluent-feeding pump 4 for feeding the eluents in the storage bottles 1 into a separation column 6 through an electromagnetic selector valve 2 and a manifold 3; an autosampler 5 for pouring a sample into the eluent, provided between the eluent-feeding pump 4 and the separation column 6; a circulating constant temperature bath 7 for keeping the separation column 6 at a constant temperature; a storage bottle of ninhydrin reagent 8; an electromagnetic valve 2A and a ninhydrin-feeding pump 9 for feeding the ninhydrin reagent in the storage bottle into a mixer 13 provided on the exit line of the separation column 6; a reaction vessel 10 in which the liquids mixed in the mixer 13 are reacted; a photometer 11 for measuring the light intensity of the liquids reacted in the reaction vessel 10; and a waste liquid storage vessel 12 for storing the liquid discharged via the photometer.

In the above apparatus, various eluents (6 kinds in this case) required for separating multicomponent amino acids such as amino acids in the physiological fluid, protein hydrolyzed amino acids, etc. are mixed in the manifold 3 at a definite ratio by means of the electromagnetic selector valve 2, and successively sent to the separation column 6 by means of the eluent-feeding pump 4 for a definite time. A sample to be analyzed is poured from the autosampler 5 into the eluent and introduced into the separation column 6. The separation column 6 has been kept at a definite temperature by means of the circulating constant temperature bath 7. On the other hand, the reagent in the ninhydrin reagent storage bottle 8 is sent to the mixer 13 by means of the ninhydrin-feeding pump 9 and then mixed with an amino acid dissolved out of the separation column 6 as a single component in the mixer 13, and further introduced into the reaction vessel 10 where it is reacted, the resulting reaction liquid exhibiting color. The colored liquid is then subjected to measurement of its absorbance by means of the photometer 11, and the form of specified absorption spectra is recorded. The waste liquid after the measurement is discharged and stored in the waste liquid storage vessel 12.

The present invention will be described in more detail by way of the following Examples.

Example 1

(1) Preparation of styrene-divinylbenzene copolymer (a):

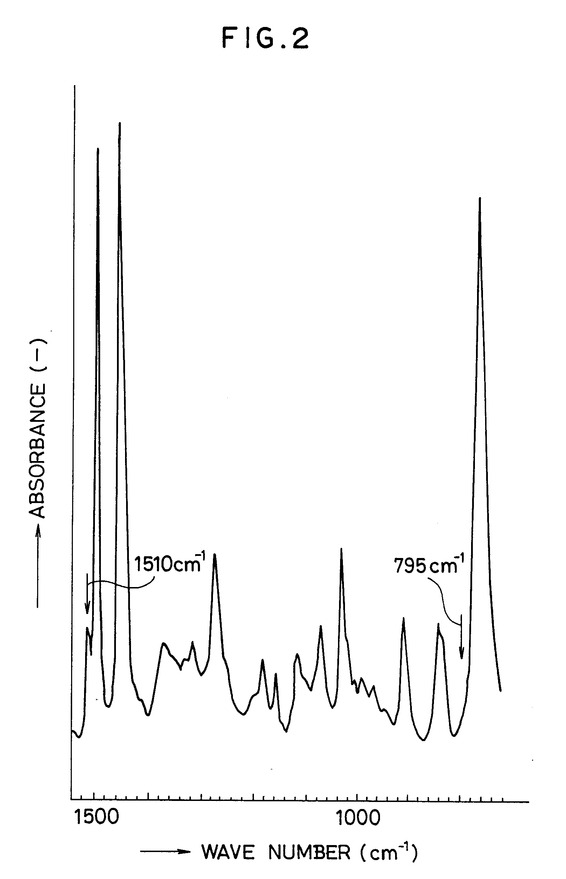

Polyvinyl alcohol (polymerization degree: 2,000 and degree of saponification: 80 mol%) (12.5 g) and sodium dodecylsulfate (0.01 g) were placed in a separable, cylindrical, three-necked flask having a 500 m$\ell$ capacity, equipped with a stirrer having propeller type agitation elements, a reflux condenser and a nitrogen gas-introducing pipe, followed by dissolving them in distilled water (200 m$\ell$) (polyvinyl alcohol concentration: $6.25 \times 10^{-2}$ g/m$\ell$ and sodium dodecylsulfate concentration: $5.0 \times 10^{-5}$ g/m$\ell$), thereafter dissolving benzoyl peroxide (0.36 g) and p-divinylbenzene (1.15 g, reagent grade: 99% purity, produced by Wako Junyaku K.K.) in styrene (18.7 m$\ell$), adding the resulting solution to the above aqueous solution, agitating the mixture at 3,000 rpm while introducing nitrogen gas and keeping the reaction solution temperature at 90°C on an oil bath, cooling the reactor after 6 hours, sufficiently washing the resulting product with hot toluene and then water, and drying at 50°C or lower to obtain a styrenedivinylbenzene copolymer (a). This copolymer (a) was in the form of spherical fine particles of 1 to 10 μm. Further, the infrared absorption spectra of the copolymer (a) were measured according to KBr method. The results are shown in Fig. 2. The absorption of p-disubstituted benzene ring originating from p-divinylbenzene was observed at 1,510 cm$^{-1}$.

(2) Preparation of cation exchange resin (A):

The copolymer (a) (5 g) obtained above was placed in a conical flask containing tetrachloethane (15 m$\ell$), followed by heating the mixture at 60°C for 30 minutes to swell the copolymer, cooling it with water, adding chlorosulfuric acid (10 m$\ell$), reacting the mixture with stirring for 4 hours, decomposing the remaining chlorosulfuric acid with glacial acetic acid, and boiling the copolymer having sulfonyl chloride introduced therein in 1N-NaOH aqueous solution for one hour to introduce sulfone group and thereby obtained a spherical cation-exchange resin (A) (7 g). The ion exchange capacity of the cation-exchange resin (A) was 3.44 meq/g. Thus, it was found that the copolymer had a sufficient ion exchange capacity as a resin for liquid chromatography.

(3) Separation of amino acids of physiological fluid:

The cation-exchange resin (A) obtained above was changed from Na type resin to Li type resin, followed by filling it into a vacant column for liquid chromatography, having an inner diameter of 4.6 mm and a length of 60 mm, passing a buffer solution of a citric acid having a lithium concentration of 0.09 mole and a pH of 2.8, through the filled column at a column temperature of 38°C and at a flow rate of 0.35 m$\ell$/min, to separate amino acids of physiological fluid. The column pressure at that time was 56 kg/cm$^2$.

(4) Separation of standard amino acids:

A buffer solution of citric acid having a Na concentration of 0.16 mole and a pH of 3.3 was passed through a column having filled therein a Na type cationexchange resin (A), at a column temperature of 57°C and at a flow rate of 0.40 m$\ell$/min to separate standard amino acids. The column pressure at that time was 90 kg/cm$^2$.

Example 2

(1) Preparation of a styrene-m-divinylbenzene copolymer (b):

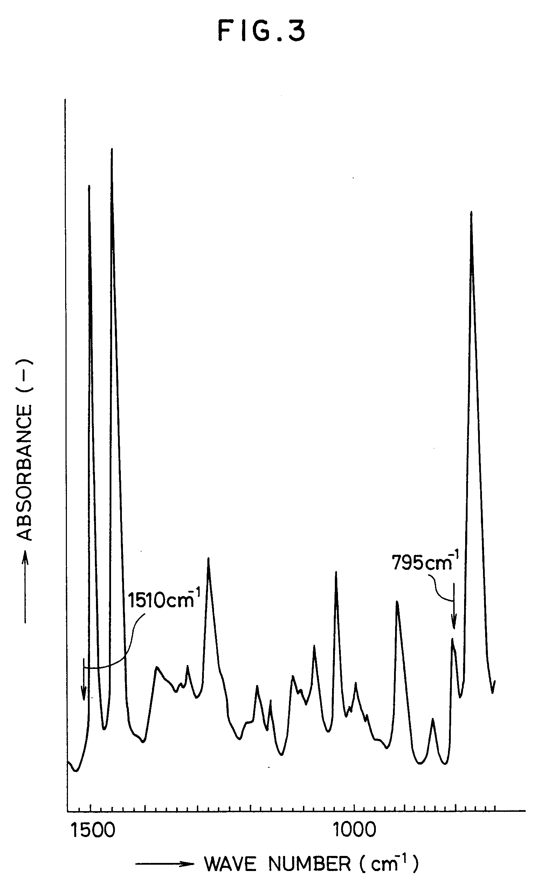

Example 1 (1) was repeated except that p-divinylbenzene was replaced by m-divinylbenzene (reagent grade, 99% purity, produced by Wako Junyaku K.K.), to obtain spherical, fine particle of styrene-m-divinylbenzene (b) having a particle size of 1 to 10 μm. The infrared absorption spectra of the copolymer (b) was measured in the same manner as in Example 1 (1). The results are shown in Fig. 3. The absorption of m-disubstituted benzene ring originating from m-divinylbenzene was observed at 795 cm$^{-1}$.

(2) Preparation of cation-exchange resin (B):

Sulfone group was introduced in the same manner as in Example 1 (2) except that the above copolymer (b) was used, to obtain a spherical cation-exchange resin (B). The ion exchange capacity of the cation-exchange resin (B) was 3.04 meq/g. Thus, it was found that the resin had a sufficient ion exchange capacity as a resin for liquid chromatography.

(3) Separation of amino acids of physiological fluid:

Separation of amino acids of physiological fluid was carried out in the same manner as in Example 1 (3) except that the above cation-exchange resin (B) was used. The column pressure at that time was 63 kg/cm$^2$.

(4) Separation of standard amino acids:

Separation of standard amino acids was carried out in the same manner as in Example 1 (4) except that the cation-exchange resin (B) was used. The column pressure at that time was 97 kg/cm$^2$.

Examples 3 to 8 and Comparative examples 1 to 5

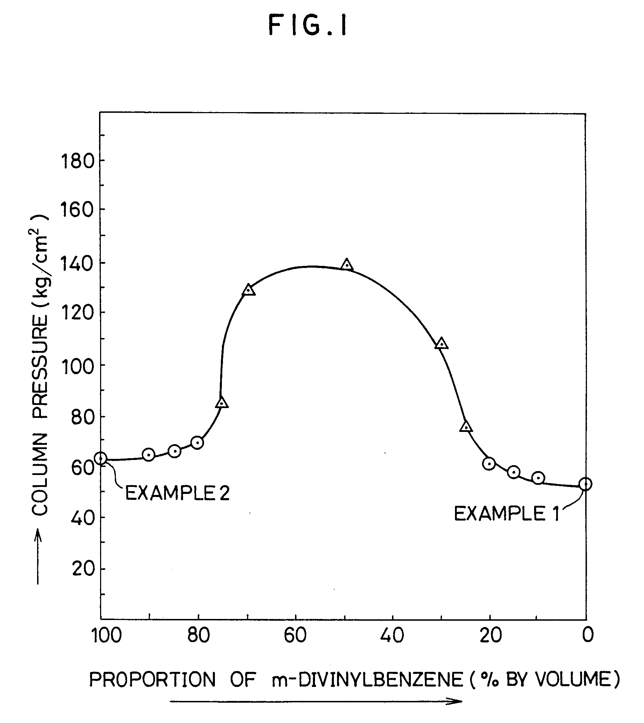

Copolymers were prepared in the same manner as in Example 1 (1) except that 10, 15, 20, 25, 30, 50, 70, 75, 80, 85 and 90% by volume of m-divinylbenzenes (reagent grade, 99% purity, produced by Wako Junyaku K.K.) were each added to p-divinylbenzene, and Na-type cation-exchange resins were prepared in the same manner as in Example 1 (2). Further, these resins were subjected to separation of amino acids of physiological fluid, and the column pressures at that time were measured. The results are shown together with those of Examples 1 and 2, in Fig. 1. In this figure, a symbol ⊙ shows the results of Examples 1 to 8 and a symbol △ shows those of Comparative examples 1 to 5.

As seen from Fig. 1, when p-divinylbenzene containing 20% by volume or less of m-divinylbenzene (Examples 1, 3 to 5) and m-divinylbenzene containing 20% by volume or less of p-divinylbenzene (Examples 2, 6 to 8) are used, the column pressure are lower.

Examples 9-13

The spherical copolymers prepared in Examples 1 and 2 (each 5 g) were made up into ion-exchange resins by introducing active groups shown in Table 1, respectively, according to a known method (Lecture on Experiments of High Polymer, vol. 7, Functional High Polymer, page 1, published by Kyoritsu Shuppan K.K. (1974)).

The respective resins were filled in a column having an inner diameter of 4.6 mm and a length of 30 mm, followed by passing an eluent consisting of 0.6 M sodium acetate aqueous solution (90% by volume) and ethanol (10% by volume) through the column. The respective column pressures are measured. The results are shown in Table 1 as compared with the conventional resins using mixture-type divinylbenzene (a mixture of m-divinylbenzene and p-divinylbenzene).

## Table 1

| Ex. | Active groups in ion-exchange resins | | Column Pressure (kg/cm$^2$) | | |
|---|---|---|---|---|---|
| | | | m-divinyl-benzene | p-divinyl-benzene | Mixture-type divinylbenzene (prior art) |
| 9 | Methyl sulfone | $-CH_2SO_3^-$ | 56 | 63 | 142 |
| 10 | carboxyl | $-COO^-$ | 54 | 62 | 138 |
| 11 | trimethyl ammonium | $-CH_2-^+N(CH_3)_3$ | 50 | 49 | 136 |
| 12 | dimethyl hydroxymethyl ammonium | $(CH_3)_2-\overset{\displaystyle CH_2OH}{\underset{\displaystyle CH_2}{N^+}}$ | 50 | 47 | 136 |
| 13 | phosphoric acid ester | $-CH_2PO(OC_2H_5)_2$ | 47 | 45 | 130 |

### Example 14

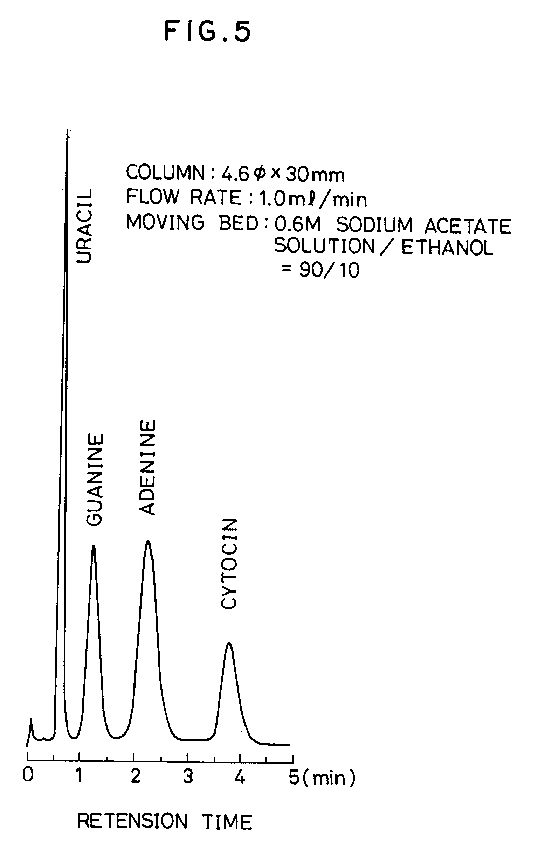

Using the column having filled therein a methylene sulfone type resin prepared in Example 3, separation of 4 nucleic acid base components of uracil, guanine, adenine and cytosine was carried out. As a result, a high rate and complete separation in a time as short as 4.5 minutes was obtained as shown in Fig. 5.

### Example 15

Styrene (18.7 m$\ell$) and m-divinylbenzene (1.15 g) were subjected to suspension polymerization in an aqueous solution in the presence of polyvinyl alcohol (particle diameter-adjusting agent), sodium dodecylsulfate (particle adhesion-preventing agent) and benzoyl peroxide (polymerization initiator) in the same manner as in Example 2, to obtain a copolymer in which the degree of crosslinking of m-divinylbenzene was 20%, followed by sulfonating the copolymer to obtain an ion-exchange resin having a particle size of 3 $\mu$m.

This ion-exchange resin was filled in a stainless column having an inner diameter of 4.6 mm and a length of 60 mm under a pressure of 150 kg/cm$^2$ using an eluent of pH 4.1, and Li$^+$ concentration 1.00 M. The column pressure of the resulting separation column was 60 kg/cm$^2$ when an eluent of pH 2.8, Li$^+$ concentration 0.09 M and ethanol concentration 3% by weight was passed through the column kept at 38°C at a flow rate of 0.35 m$\ell$/min (linear velocity: 0.12 cm/sec).

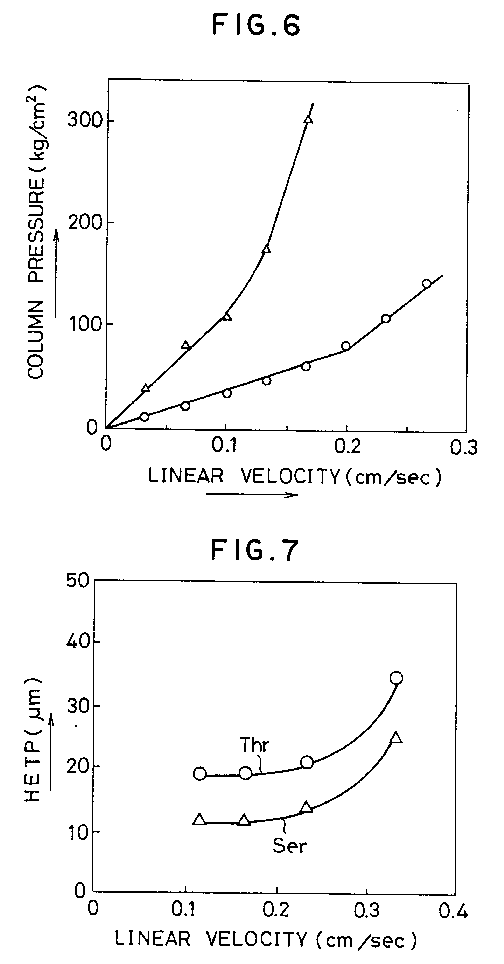

Using this separation column and at a column temperature of 57°C, an eluent of pH 2.8, Li$^+$ concentration 0.09 M and ethanol concentration 3% by weight was passed through the column at varied linear velocities to measure the resulting column pressures. The results are shown by a symbol ○ in Fig. 6. In the case of a linear velocity of 0.1 cm/sec, the column pressure was 40 kg/cm$^2$; in the case of a linear velocity of 0.2 cm/sec, the column pressure was 80 kg/cm$^2$; but in the case of a linear velocity exceeding the above value, the column pressure rapidly increased.

Further, the column efficiency (HETP) relative to the linear velocity was examined. The results are shown in Fig. 7. In the range of a linear velocity of 0.1 to 0.2 cm/sec, HETP was almost constant, but in the case of a linear velocity exceeding 0.2 cm/sec, HETP rapidly increased; thus it was found that in the case of a linear velocity within a range of 0.1 to 0.2 cm/sec, a high rate separation with a high column efficiency was possible.

Comparative example 6

Example 15 was repeated except that a commercially available divinylbenzenes consisting of m-divinylbenzene and p-divinylbenzene were used, to prepare an ion-exchange resin. A separation column using the above resin was prepared and its column pressure was measured to be 120 kg/cm$^2$.

Further, using this separation column, the relationship between the linear velocity of the eluent and the column pressure was examined in the same manner as in Example 15. The results are shown by a symbol Δ in Fig. 6. It was found that in the case of a linear velocity of 0.1 cm/sec, the column pressure was 110 kg/cm$^2$ and with increase of the linear velocity, the column pressure rapidly increased.

Example 16

Using the separation column prepared in Example 15, a high rate separation of 39 amino acids of physiological fluid was carried out for 80 minutes. The column temperature was varied starting from 38°C, to 32°C after 2.8 minutes, to 60°C after 14.4 minutes, to 43°C after 23.1 minutes, to 50°C after 28 minutes, to 43°C after 29.4 minutes, to 70°C after 33.6 minutes, to 40°C after 46.2 minutes, and to 70°C after 65.8 minutes. Further, the pH of the eluent was varied starting from 2.8, to 3.0 after 12.6 minutes, gradually raising to 3.1 till after 21 minutes, to 3.6 after 21.1 minutes, to 3.7 after 29.5 minutes, to 3.6 after 33.7 minutes, to 3.3 after 49.1 minutes, to 4.1 after 53.6 minutes and to 4.1 after 70.1 minutes. The Li$^+$ concentration was varied starting from 0.09 M, to 0.123 M after 6 minutes, gradually raising the concentration since 12.6 minutes, to 0.140 M after 21 minutes, to 0.239 M after 21.1 minutes, to 0.255 M after 29.5 minutes, to 0.721 M after 33.7 minutes, to 0.454 M after 49.1 minutes, to 1.0 M after 53.6 minutes, to 0.850 M after 60.6 minutes and 1.0 M after 70.1 minutes. The ethanol concentration (% by weight) was varied starting from 3%, to 10% after 33.7 minutes, to 1.8% after 49.1 minutes, to 0% after 6 minutes, to 0.6% after 60.6 minutes and to 0% after 70.1 minutes.

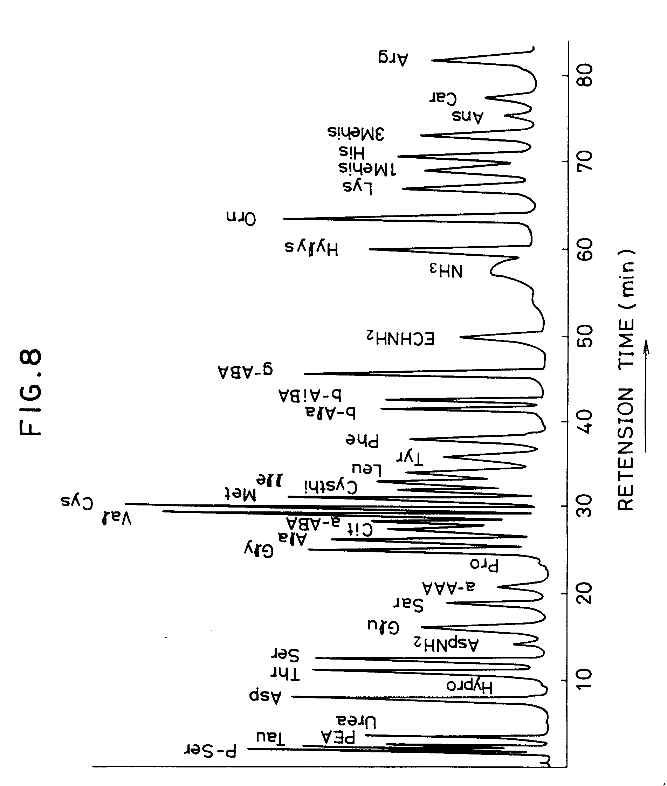

The chromatogram of the physiological fluid are shown in Fig. 8. All of the 39 amino acids could be separated. The flow rate of the eluent at that time was 0.17 cm/sec in terms of a linear velocity, and the column pressure was 84 kg/cm$^2$. Further, detection of amino acids was carried out at wave lengths of 440 nm and 570 nm according to ninhydrin colors reaction.

Comparative example 7

Using the separation column prepared in Comparative example 1, a high rate separation of amino acids of physiological fluid was carried out in the same manner as in Example 16. The column pressure exceeded 300 kg/cm$^2$ which is more than the pressure limit of the device, so that analysis was impossible.

According to the present invention, since a styrenedivinylbenzene copolymer obtained by using a divinylbenzene with which another isomer is substantially not present in admixture is converted into an ion-exchange resin, it is possible to reduce the column pressure even when an eluent is passed therethrough at a high rate, and it is possible to reduce the load applied to a device for liquid chromatography. Further, since it is possible to carry out separation of amino acids, for example, at a high flow rate without reducing the separation performance, it is possible to shorten the analytical or separation time.

**Claims**

1. A process for producing an ion-exchange resin, which process comprises copolymerising a styrene and a divinylbenzene with which 0 to 20% by volume of another isomer thereof is admixed thereby to obtain a styrene-divinylbenzene copolymer, crosslinking the resultant copolymer and introducing an active group into the crosslinked copolymer so as to form an ion-exchange resin, the said active group imparting to the resin the ability to combine with or exchange ions in a solution.

2. A process according to claim 1, wherein the said isomer is m-divinylbenzene or p-divinylbenzene.

3. A process according to claim 1 or 2, wherein the amount of the other isomer is in the range of from 0 to 10% by volume of the divinylbenzene.

4. A process according to claim 1, 2 or 3, wherein the active group is selected from sulphone groups, methyl sulphone groups, carboxyl groups, trimethyl ammonium groups, dimethyl hydroxymethyl ammonium groups, and phosphoric acid ester groups.

5. A process for separating amino acids, which process comprises preparing a separation column filled with an ion-exchange resin which has been obtained by a process as defined in any one of the preceding claims, adsorbing amino acids to be separated on the ion-exchange resin in the separation column, passing an eluent for the amino acids through the separation column at a linear velocity of 0.1 to 0.2 cm/sec, to obtain successively solutions containing the separated amino acids.

6. A process according to claim 5, in which the ion-exchange resin has been obtained by sulphonating the styrene-divinylbenzene copolymer.

7. Use of an ion-exchange resin obtained by a process as claimed in any one of claims 1 to 4 for separating amino acids from a mixture of such acids.

# FIG.1

# FIG.2

# FIG.3

# F I G. 4

# FIG.5

COLUMN : 4.6 φ × 30mm
FLOW RATE : 1.0mℓ/min
MOVING BED : 0.6M SODIUM ACETATE
SOLUTION / ETHANOL
= 90/10

URACIL

GUANINE

ADENINE

CYTOCIN

0　1　2　3　4　5(min)

RETENSION TIME

# FIG.6

# FIG.7

FIG.8